# EUROPEAN PATENT SPECIFICATION

(11) **EP 2 555 125 B1**
(45) Date of publication and mention of the grant of the patent: **21.01.2015**
(21) Application number: 12178880.6
(22) Date of filing: 01.08.2012
(51) Int. Cl.: G06F 13/40, H03K 19/00

(54) **A device for interfacing to a bidirectional bus line of the I2C type**
Schnittstellen-Vorrichtung für eine bidirektionale Busleitung des Typs I2C
Dispositif d'interfaçage à un bus bidirectionnel de type I2C

(30) Priority: 01.08.2011 IT TO20110715
(43) Date of publication of application: 06.02.2013
(73) Proprietor: Indesit Company S.p.A., 60044 Fabriano (AN) (IT)
(72) Inventor: Burzella, Luciano, I-60044 Fabriano (AN) (IT)
(74) Representative: Dini, Roberto

(56) References cited:
- WO-A2-2009/013008
- US-A- 3 832 489
- US-A- 5 585 755

## Description

### Field of the invention

The present invention relates to a device for interfacing to a bidirectional bus line of the I2C type, also referred to as IIC or through other similar acronyms.

### Background art

In an architecture based on an I2C communication standard, at least one microprocessor and at least one device are connected to each other through a communication bus having two pairs of lines: one for data and one for synchronization. When the bus is set to a high logic level, no device is communicating; vice versa, when the logic level is low, there is at least one device transmitting.

When the microprocessor sets a low logic level, the currents for setting high the other devices connected to the I2C bus reclose to the communication port of the microprocessor itself. As the number of devices connected to the bus grows, the currents involved at said port grow as well, which implicitly limits the number of devices that can be handled within a single structure.

When a particularly long bus needs to be provided, it becomes more likely that the bus will couple to other disturbing electromagnetic sources, which might generate overcurrents that might cause damage to the microprocessor(s) connected to the bus.

It would therefore be desirable that the bus potential could be decoupled from the potential levels that the microprocessor's ports may take in operation, so as to prevent any damage to the microprocessors due to the bus coupling to noise sources and to increase the currents circulating in the bus for the purpose of making it more immune to noise.

This would also allow using microprocessors and devices in general having different reference potentials, the bus potential level being the same.

A further problem to be addressed is the fact that it is necessary to at least reduce the effect of undesired voltage pulses possibly present on the bus, which might damage the microprocessor. This problem is especially felt when said devices are used in household appliances. WO2009/013008 discloses a device according to the preamble of claim 1.

### Summary of the invention

It is one object of the present invention to provide a device for interfacing to a bidirectional bus line of the I2C type which is adapted to limit the currents that reclose to the microprocessor's transmission port, thus solving the above-mentioned problem.

It is a further object of the present invention to provide a device for interfacing to a bidirectional bus line of the I2C type which is particularly robust against any undesired voltage pulses on the bus.

The present invention relates to a device for interfacing to a bidirectional bus line of the IIC type, comprising: a first pin adapted to be connected to a port of a device adapted to communicate through an IIC bus, and normally kept at a first high logic potential; a second pin adapted to be connected to an IIC bus, an normally kept at a second high logic potential,

**characterized in that** it comprises: first switching means having an output directly connected to said second pin, a control input connected to said second pin through a first polarization resistor, and a first terminal connected to a first reference potential, and drive means connected to the control input of said first switching means, adapted to set said first switching means to conduction when said first pin is set to a low logic level.

According to another aspect of the invention, said device is particularly suitable for application when the bus length is considerable and/or when there are a large number of devices connected to the I2C bus, as is the case, for example, of the electronic circuits of a household appliance. The bus length is considerable, for example, when the I2C bus is used for connecting devices located on different electronic boards within the household appliance, e.g. a load control board and a user interface control board, which may be placed at a distance from each other of up to one metre.

It is a particular object of the present invention to provide a device for interfacing to a bidirectional bus line of the I2C type and a household appliance incorporating such a device as clearly set out in the appended claims, which are intended to be an integral part of the present description.

### Brief description of the drawings

Further features and advantages of the invention will become more apparent from the following detailed description of some preferred but non-limiting embodiments of a device for interfacing to a bidirectional bus line of the I2C type, provided merely by way of explanatory and non-limiting example with reference to the annexed drawings, wherein:
Fig. 1 shows an example of a circuit diagram complying with the present invention,
Fig. 2 relates to an auxiliary portion of the device, which is adapted to define a reference potential (VCC_BAR1).

In the drawings, the same reference numerals and letters identify the same items or components.

### Detailed description of an example of embodiment.

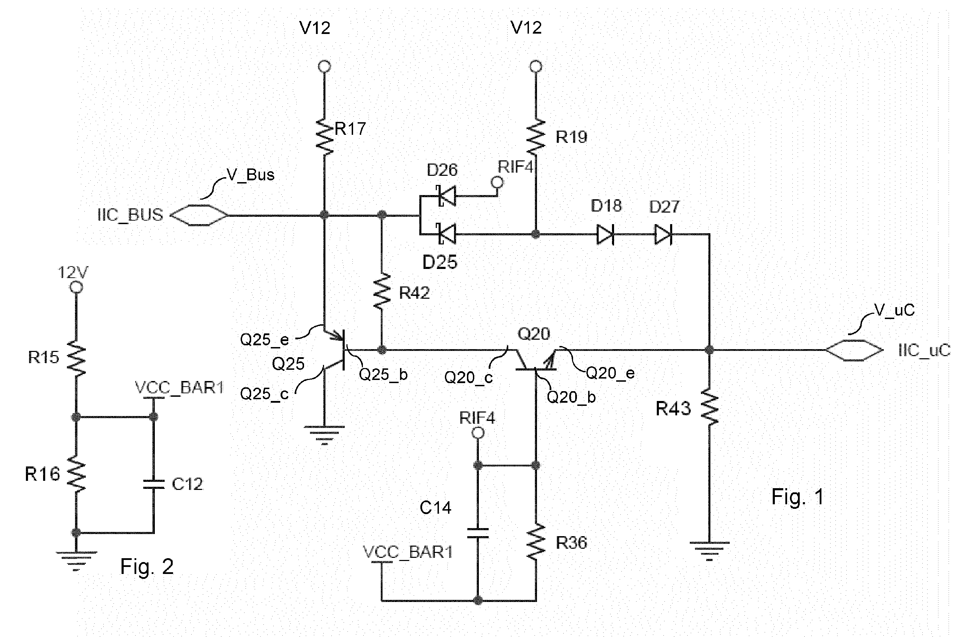

With reference to Fig. 1, an interface device according to the present invention comprises:
- a first pin IIC_uC adapted to be connected to a port of any device comprising interface means suitable for communicating through an I2C bus; by way of example, said any device will hereafter be referred to as a microprocessor;
- a second pin IIC_Bus adapted to be connected to an I2C bus and to a second supply potential V12, e.g. through a suitable pull-up resistor R17,
- a first transistor Q25, e.g. of the PNP type, including
   ∘ an emitter Q25_e directly connected to the second pin ICC_BUS,
   ∘ a base Q25_b connected to the second pin ICC_BUS through a resistor R42,
   ∘ a collector Q25_c connected to a first reference potential 0
- a second transistor Q20, e.g. of the NPN type, including:
   ∘ a collector Q20_c connected to the base of the first transistor Q25,
   ∘ an emitter Q25_e connected to the first pin ICC_uC,
   ∘ a base Q25_b connected to a third supply potential RIF4,
- a voltage divider having a pull-up resistor R19 and a ground resistor R43 connected to the first pin IIC_uC, thus defining a high logic level potential V_uC High, at least as long there is high impedance at the communication port of the microprocessor,
- a group of diodes D25, D18 and/or D27 in "back to back" configuration, meaning by this that their respective anodes are connected together and to the second supply potential V12 through a pull-up resistor R19: one diode D25 has the cathode connected to the second pin IIC-BUS and at least another diode D18 and/or D27 has the cathode connected to the first pin IIC_uC,
- an additional diode D26 having the cathode connected to the second pin IIC_BUS and the anode connected to said third reference potential RIF4.

Two interconnection branches are thus defined between the first pin IIC_uC and the second pin IIC_BUS: the first branch R1 through the group of diodes D25, D18, D27; the second branch R2 through Q25 and Q20.

The two branches are interrelated through RIF4.

It must be taken into account that RIF4 varies depending on the circuit's operating conditions. In fact, as long as Q20 is inhibited, no current circulates through the drive circuit P and RIF4 goes to approx. 2 Volts, whereas when Q20, and hence Q25, are conducting, RIF4 is brought, through the effect of the conduction of D26, to a condition of equilibrium of approx. 0.9 Volts, which is nevertheless suitable to ensure a stable conduction of Q20.

The drive circuit P is made up of, in fact, a voltage divider R15 and R16, generated by the first reference potential V12, which supplies the node RIF4, coinciding with the base of Q20 and the anode of D26, through the parallel of a capacitor C14 and a resistor R36. The potential VCC_BAR1 is generated by said voltage divider with R16 connected to ground and R15 connected to the potential V12. The value of the potential of RIF4 matches the one of VCC_BAR1 when no current is circulating through the resistor R36, and hence through Q20.

The capacitor C 14 has the function of ensuring a faster switching of Q20.

As will become apparent below, the series D18 and D27 is necessary to obtain a predefined voltage drop of approx. 1V, this being alternatively obtainable by using just one diode D18 or D27 and a resistor connected in series or just one resistor.

It is preferable that there is at least one diode D18 or D27, possibly in series with a resistor, in order to appropriately reduce the voltage level at the pin V_uC when the level received on the bus is low. The presence of a diode D18 or D27 has the effect of filtering any negative voltage pulses on the bus, thereby protecting the microprocessor. A similar effect of filtering any positive voltage pulses present on the bus in order to protect the microprocessor is provided by the diode D25.

Q20 and Q25 are so arranged as to multiply the respective current gains, so that in order to turn on Q25 it is sufficient that the microcontroller drains the weak base current of Q20.

The interface device may be in the following possible states:
- the pin uC and the pin Bus are both kept at a high logic level, respectively V_uC High and V_Bus High: in this condition, either no device is transmitting, i.e. all the devices connected to the I2C bus are receiving, or the microprocessor connected to the pin uC is transmitting at a high level;
- the pin uC is not driven by the respective microprocessor, since the communication port is set to reception, while the pin Bus is driven to a low logic level V_Bus Low: this means that the microprocessor connected to the pin uC is receiving data from another device connected to the I2C bus, which is driving its own port to V_uC Low, thereby also setting the bus to the low logic level V_Bus Low;
- the pin uC is driven to a low logic level V_uC Low by the respective microprocessor, which is transmitting data; this means that there is low impedance at the communication port of the microprocessor, while the other devices (those communicating) are in reception (by keeping high impedance at their own communication ports with respective V_uC High).

In the first case of the above-listed operating conditions, i.e. when all the devices connected to the IIC bus are driving the bus to a high logic level and also the logic level of the pin IIC_uC is high, all devices are in reception.

In this circumstance, the potential of the emitter of the second transistor Q20 depends on the voltage divider formed by the resistors R19 and R43, which is preferably approximately equal to the microprocessor's supply voltage, e.g. 3.3V or 5V or another voltage. Q20 is inhibited because the potential imposed by RIF4 on the base of Q20, approx. 2 Volts, is lower than the potential of the emitter of Q20. The inhibition of Q20 implies, due to the connection configuration between the two transistors, the inhibition of Q25, so that substantially there is no current circulating in the second branch R2.

Since Q25 is inhibited, and R17 has a lower resistance value than R19, it turns out that the diode D25 is inversely polarized, and therefore is not conducting. In such a condition, RIF4 is approximately equal to 2 Volts, so that the diode D26 is also inhibited, since the potential at the cathode is greater than at the anode.

If the microprocessor connected to the first pin IIC_uC is in reception while another device connected to the IIC bus is in transmission and is imposing a low logic level on the IIC bus, corresponding to 0.7 V at most, at the node RIF4 there will be approx. 0.9V, at the anode of D18 approx. 0.9 V and, as a consequence, the pair of diodes D18, D27 will be inhibited, thus preventing the potential from being transferred from the bus IIC_BUS to the pin IIC_uC; Q20 will be turned on, generating a potential of approx. 0.3 V at the pin II-uC, corresponding to a low logic level in reception. Q25 will be inhibited because the difference of potential between the base and the emitter will be approx. 0.4 V, i.e. under the on threshold.

When the microprocessor is in transmission, it drives a low logic level. In such a circumstance, Q20 is in the emitter follower configuration, i.e. the same configuration as Q25, so that the difference of potential (Vbe) between the respective base (approx. 0.9V) and the respective emitter (approx. 0 Volt) of Q20 is such that it is set to conduction. As a result, this sets the transistor Q25 to conduction, which will reclose the second pin IIC_BUS to the first reference potential 0, with a difference of potential of approx. 0.7V equal to the voltage at its own emitter (Vec), thus closing to ground the bus currents. This advantageously decouples the currents circulating on the bus from the current absorbed by the microprocessor's communication port, connected to the first pin IIC_uC. Furthermore, being the base of Q20 connected to the anode of D26, the latter will drain a part of the base current of Q20, which, instead of reclosing to R43, will reclose to R42. Therefore, although RIF4 will be reduced to as low as 0.9V when the transistors are conducting, D26 will turn out to be directly polarized and conducting.

The data signals received by the first pin will go through the two transistors Q20, Q25 to reach the second pin.

From a certain point of view, the base of Q25 is controlled by means of the collector current of Q20, thus obtaining a multiplication of the total gain of the set Q20, Q25; this also translates into greater circuit reactivity, which is further enhanced by C14, which assists in draining the base of Q20 when Q20 must be inhibited.

Another advantage of the proposed scheme is that, with a minimal input current drawn from the 12V potential source, it is possible to cover a wide variety of output currents.

In addition, the scheme is so configured as to find a stable working point independently of the values of the selected pull-up resistors.

Moreover, the driving of the transistor Q25 is fully done through current.

Since the man skilled in the art knows how to adapt the circuit to PNP and NPN transistors, etc., for generalization purposes it will be assumed herein that a transistor has one base, one input and one output. The term "input" will refer herein to the collector for a PNP transistor or to the emitter for an NPN transistor, etc.

Furthermore, it is preferable that the two diodes D25 and D26 are included into a single package and are of the Schottky type.

Some preferred values of the components described herein are as follows:
the resistor R17 has a resistance of approx. 1k - 10kΩ
the resistor R42 has a resistance of approx. 2.2 kΩ and/or
the resistor R19 has a resistance of approx. 22kiΩ and/or
the resistor R43 has a resistance of approx. 10kΩ and/or
the pull-up resistor R15 is approx. 20kΩ
the resistor R16 is approx. 4kΩ and/or
the resistor R43 has a resistance of approx. 10kΩ and/or
the drain capacitor has a capacity of approx. 100pF,
the filter capacitor C12 has a capacity of approx. 100nF.

The above-described embodiment example may be subject to variations without departing from the protection scope of the present invention, including all equivalent designs known to a man skilled in the art.

From the above description, those skilled in the art can produce the object of the invention without introducing any further construction details.

## Claims

1. A device for interfacing to a bidirectional bus line of the IIC type, comprising:
- a first pin (IIC_uC) adapted to be connected to a port of a device adapted to communicate through an IIC bus, and normally kept at a first high logic potential (V_uC High);
- a second pin (IIC_Bus) adapted to be connected to an IIC bus, and normally kept at a second high logic potential (V_Bus High),
**characterized in that** it comprises:
- first switching means (Q25) having an output (Q25_e) directly connected to said second pin (IIC_Bus), a control input (Q25_b) connected to said second pin (IIC_Bus) through a first polarization resistor (R42), and a first terminal (Q25_c) connected to a first reference potential (0), and
- drive means (Q20) connected to the control input (Q25_b) of said first switching means (Q25), adapted to set said first switching means (Q25) to conduction when said first pin (IIC_uC) is set to a low logic level (V_uC Low).

2. A device according to claim 1, wherein said drive means comprise a second transistor (Q20) having an output (Q20_c) connected to the control input (Q25_b) of the first transistor (Q25), an input (Q20_e) connected to said second pin (IIC_uC), and a control input (Q20_b) connected to a third reference potential (RIF4) and/or to a drive circuit (P) adapted to generate said third reference potential (RIF4).

3. A device according to one of the preceding claims, further comprising a third pin adapted to be connected to a second supply potential (V12) having a greater value than said first reference potential (0), and a group of diodes comprising:
- at least one first diode (D25) having an anode operationally connected to said second supply potential (V12) and a cathode connected to said first pin (IIC_uC), and/or
- at least one first diode (D25) having an anode operationally connected to said second supply potential (V12) and a cathode connected to said second pin, and at least one second diode (D18 and/or D27) having an anode connected to the anode of said first diode (D25) and a cathode connected to said first pin (IIC_uC), and/or
- at least one first diode (D25) having an anode operationally connected to said second supply potential (V12) and a cathode connected to said second pin, at least one second diode (D18) and one third diode (D27) connected together in cascade, with an anode of the second diode (D18) connected to the anode of said first diode (D25) and a cathode of the third diode (D27) connected to said first pin (IIC_uC), and/or
- at least one first diode (D25) having an anode operationally connected to said second supply potential (V12) and a cathode connected to said second pin, and at least one second diode (D18 or D27) having an anode connected to the anode of said first diode (D25) and a cathode connected to said first pin (IIC_uC) through an additional resistor, and/or
- at least one first diode (D25) having an anode operationally connected to said second supply potential (V12) and a cathode connected to said second pin, and at least one additional resistor that connects the anode of the first diode also to said first pin (IIC_uC).

4. A device according to claim 3, wherein said first pin (IIC_uC) is kept at said high logic potential (V_uC HIGH) by means of a first voltage divider shunt from said second supply potential (V12) and having a pull-up resistor equal to the sum of at least one second resistor (R19) and one third resistor (R43) shunt to said first reference potential (0).

5. A device according to one of claims 2 to 4, further comprising a fourth diode (D26) having a cathode connected to said second pin (IIC_Bus) and an anode connected to said third reference potential (RIF4).

6. A device according to one of claims 3 to 5, wherein said drive circuit (P) comprises a second voltage divider adapted to define a fourth supply potential (VCC_BAR1) having a pull-up resistor (R15) connected to said second supply potential (V12), a resistor (R16) shunt to said first reference potential (0), the latter being in parallel to a filter capacitor (C12), said fourth supply potential defining said third reference potential (RIF4) through a fourth resistor (R43) in parallel to a drain capacitor (C14).

7. A device according to any one of the preceding claims, wherein:
said first switching means comprise a transistor (Q25);
said first divider is adapted to generate a logic potential (V_uC) of approx. 3.3 Volts,
and/or said second divider is adapted to generate said fourth reference potential (VCC_BAR1) equal to approx. 2 Volts, and/or
said first resistor (R42) has a resistance of approx. 2.2 kΩ, and/or
said second resistor (R19) has a resistance of approx. 22kΩ, and/or
said first voltage divider has a resistor (R43) shunt to said first reference potential (0) with a resistance of approx. 10kΩ, and/or
said pull-up resistor (R15) of the second voltage divider has a resistance of approx. 20kΩ and a resistor shunt to said first reference potential (0) with a resistance of approx. 4kΩ,
and/or said fourth resistor (R43) has a resistance of approx. 10kΩ, and/or
said drain capacitor has a capacity of approx. 100pF.

8. A device according to any one of the preceding claims, wherein said second pin is kept at said second high logic potential (V_Bus High) through a third pull-up resistor (R17).

9. An IIC communication structure comprising at least one IIC bus and at least one processing device having at least one port of communication means adapted to communicate through the IIC bus and **characterized by** comprising an interface device according to any one of the preceding claims.

10. A household appliance comprising a device according to any one of claims 1 to 8 and/or comprising an I2C communication structure according to claim 9.

## Patentansprüche

1. Schnittstellen-Vorrichtung für eine bi-direktionale Busleitung vom IIC-Typ, umfassend:
- einen ersten Anschluss (IIC_uC), der angepasst ist, mit einem Port einer Vorrichtung, die angepasst ist, über einen IIC-Bus zu kommunizieren, verbunden zu werden, und der normalerweise auf einem ersten hohen logischen Potential (V_uC High) gehalten wird;
- einen zweiten Anschluss (IIC_Bus), der angepasst ist, mit einem IIC-Bus verbunden zu werden, und der normalerweise auf einem zweiten hohen logischen Potential (V_Bus High) gehalten wird,
**dadurch gekennzeichnet, dass** die Vorrichtung umfasst:
- erste Schaltmittel (Q25), die einen Ausgang (Q25_e), der direkt mit dem zweiten Anschluss (IIC_Bus) verbunden ist, einen Steuereingang (Q25_b), der mit dem zweiten Anschluss (IIC_Bus) über einen ersten Polarisierungswiderstand (R42) verbunden ist, und einen ersten Anschluss (Q25_c), der mit einem ersten Bezugspotential (0) verbunden ist, aufweisen, und
- Ansteuermittel (Q20), die mit dem Steuereingang (Q25_b) der ersten Schaltmittel (Q25) verbunden sind und angepasst sind, die ersten Schaltmittel (Q25) auf leitend zu setzen, wenn der erste Anschluss (IIC_uC) auf einen niedrigen logischen Pegel (V_uC Low) gesetzt wird.

2. Vorrichtung nach Anspruch 1, wobei die Ansteuermittel einen zweiten Transistor (Q20) umfassen, der einen Ausgang (Q20_c), der mit dem Steuereingang (Q25_b) des ersten Transistors (Q25) verbunden ist, einen Eingang (Q20_e), der mit dem zweiten Anschluss (IIC_uC) verbunden ist, und einen Steuereingang (Q20_b), der mit einem dritten Bezugspotential (RIF4) und/oder einer Ansteuerschaltung (P), die angepasst ist, das dritte Bezugspotential (RIF4) zu erzeugen, verbunden ist.

3. Vorrichtung nach einem der vorangegangen Ansprüche, des Weiteren umfassend einen dritten Anschluss, der angepasst ist, mit einem zweiten Versorgungspotential (V12), das einen größeren Wert aufweist als das erste Bezugspotential (0), verbunden zu werden, und ein Gruppe von Dioden, umfassend:
- zumindest eine erste Diode (D25), die eine Anode, die operativ mit dem zweiten Versorgungspotential (V12) verbunden ist, und eine Kathode, die mit dem ersten Anschluss (IIC_uC) verbunden ist, aufweist, und/oder
- zumindest eine erste Diode (D25), die eine Anode, die operativ mit dem zweiten Versorgungspotential (V12) verbunden ist, und eine Kathode, die mit dem zweiten Anschluss verbunden ist, aufweist, und zumindest eine zweite Diode (D18 und/oder D27), die eine Anode, die mit der Anode der ersten Diode (D25) verbunden ist, und eine Kathode, die mit dem ersten Anschluss (IIC_uC) verbunden ist, aufweist, und/oder
- zumindest eine erste Diode (D25), die eine Anode, die operativ mit dem zweiten Versorgungspotential (V12) verbunden ist, und eine Kathode, die mit dem zweiten Anschluss verbunden ist, aufweist, zumindest eine zweite Diode (D18) und eine dritte Diode (D27), die kaskadenförmig miteinander verbunden sind, wobei eine Anode der zweiten Diode (D18) mit der Anode der ersten Diode (D25) verbunden ist, und eine Kathode der dritten Diode (D27) mit dem ersten Anschluss (IIC_uC) verbunden ist, und/oder
- zumindest eine erste Diode (D25), die eine Anode, die operativ mit dem zweiten Versorgungspotential (V12) verbunden ist, und eine Kathode, die mit dem zweiten Anschluss verbunden ist, aufweist, und zumindest eine zweite Diode (D18 oder D27), die eine Anode, die mit der Anode der ersten Diode (D25) verbunden ist, und eine Kathode, die mit dem ersten Anschluss (IIC_uC) über einen zusätzlichen Widerstand verbunden ist, aufweist, und/oder
- zumindest eine erste Diode (D25), die eine Anode, die operativ mit dem zweiten Versorgungspotential (V12) verbunden ist, und eine Kathode, die mit dem zweiten Anschluss verbunden ist, aufweist, und zumindest einen zusätzlichen Widerstand, der die Anode der ersten Diode auch mit dem ersten Anschluss (IIC_uC) verbindet.

4. Vorrichtung nach Anspruch 3, wobei der erste Anschluss (IIC_uC) auf dem hohen logischen Potential (V_uC HIGH) mittels eines ersten Spannungsteilers gehalten wird, der von dem zweiten Versorgungspotential (V12) abgeleitet ist und der einen Pull-Up-Widerstand aufweist, der gleich der Summe von zumindest einem zweiten Widerstand (R19) und einem dritten Widerstand (R43), der an das erste Bezugspotential (0) angeschlossen ist, ist.

5. Vorrichtung nach einem der Ansprüche 2 bis 4, des Weiteren umfassend eine vierte Diode (D26), die eine Kathode, die mit dem zweiten Anschluss (IIC_Bus) verbunden ist, und eine Anode, die mit dem dritten Bezugspotential (RIF4) verbunden ist, aufweist.

6. Vorrichtung nach einem der Ansprüche 3 bis 5, wobei die Ansteuerschaltung (P) einen zweiten Spannungsteiler umfasst, der angepasst ist, ein viertes Versorgungspotential (VCC_BAR1) zu definieren, und der einen Pull-Up-Widerstand (R15), der mit dem zweiten Versorgungspotential (V12) verbunden ist, und einen Widerstand (R16), der an das erste Bezugspotential (0) angeschlossen ist, aufweist, wobei Letzterer parallel ist zu einer Filterkapazität (C12), wobei das vierte Versorgungspotential das dritte Bezugspotential (RIF4) durch einen vierten Widerstand (R43) parallel zu einem Drain-Kondensator (C14) definiert.

7. Vorrichtung nach einem der vorangegangenen Ansprüche, wobei:
die ersten Schaltmittel einen Transistor (Q25) umfassen;
der erste Teiler angepasst ist, ein logisches Potential (V_uC) von ungefähr 3,3 Volt zu erzeugen, und/oder
der zweite Teiler angepasst ist, das vierte Bezugspotential (VCC_BAR1) von ungefähr gleich 2 Volt zu erzeugen, und /oder
der erste Widerstand (R42) einen Widerstandswert von ungefähr 2,2 kΩ aufweist, und/oder
der zweite Widerstand (R19) einen Widerstandswert von ungefähr 22 kΩ aufweist, und/oder
der erste Spannungsteiler einen Widerstand (R43) aufweist, der an das erste Bezugspotential (0) angeschlossen ist, mit einem Widerstandswert von ungefähr 10 kΩ, und/oder
der Pull-Up-Widerstand (R15) des zweiten Spannungsteilers einen Widerstand von ungefähr 20 kΩ aufweist und einen Widerstand, der an das erste Bezugspotential (0) angeschlossen ist, mit einem Widerstandswert von ungefähr 4 kΩ, und/oder
der vierte Widerstand (R43) einen Widerstandswert von ungefähr 10 kΩ aufweist, und/oder
der Drain-Kondensator eine Kapazität von ungefähr 100 pF aufweist.

8. Vorrichtung nach einem der vorangegangenen Ansprüche, wobei der zweite Anschluss auf dem zweiten hohen logischen Potential (V_Bus High) durch einen dritten Pull-Up-Widerstand (R17) gehalten wird.

9. IIC-Kommunikationsstruktur, die zumindest einen IIC-Bus und zumindest eine Verarbeitungsvorrichtung, die zumindest einen Port von Kommunikationsmitteln aufweist, die angepasst sind, über den IIC-Bus zu kommunizieren, **dadurch gekennzeichnet, dass** die Struktur eine Schnittstellen-Vorrichtung nach einem der vorangegangenen Ansprüche umfasst.

10. Haushaltsgerät, umfassend eine Vorrichtung nach einem der Ansprüche 1 bis 8 und/oder umfassend eine I2C-Kommunikationsstruktur nach Anspruch 9.

## Revendications

1. Dispositif d'interfaçage à une ligne de bus bidirectionnel du type IIC, comprenant :
- une première broche (IIC_uC) agencée pour être connectée à un port d'un dispositif agencé pour communiquer à travers un bus IIC, et maintenue normalement à un premier potentiel logique haut (V_uC Haut) ;
- une deuxième broche (IIC_Bus) agencée pour être connectée à un bus IIC, et maintenue normalement à un deuxième potentiel logique haut (V_Bus Haut),
**caractérisé en ce qu'**il comporte :
- des premiers moyens de commutation (Q25) présentant une sortie (Q25_e) connectée directement à ladite deuxième broche (IIC_Bus), une entrée de commande (Q25_b) connectée à ladite deuxième broche (IIC_Bus) par l'intermédiaire d'une première résistance de polarisation (R42), et une première borne (Q25_c) connectée à un premier potentiel de référence (0), et
- des moyens de commande (Q20) connectés à l'entrée de commande (Q25_b) desdits premiers moyens de commutation (Q25), agencés pour mettre lesdits premiers moyens de commutation (Q25) à l'état de conduction lorsque ladite première broche (IIC_uC) est mise à un niveau logique bas (V_uC Bas).

2. Dispositif selon la revendication 1, dans lequel lesdits moyens de commande comprennent un deuxième transistor (Q20) présentant une sortie (Q20_c) connectée à l'entrée de commande (Q25_b) du premier transistor (Q25), une entrée (Q20_e) connectée à ladite première broche (IIC_uC), et une entrée de commande (Q20_b) connectée à un troisième potentiel de référence (RIF4) et/ou à un circuit de commande (P) agencé pour générer ledit troisième potentiel de référence (RIF4).

3. Dispositif selon l'une des revendications précédentes comprenant, de plus, une troisième broche agencée pour être connectée à un deuxième potentiel d'alimentation (V12) ayant une valeur supérieure audit premier potentiel de référence (0), et un groupe de diodes comportant :
- au moins une première diode (D25) présentant une anode connectée fonctionnellement audit deuxième potentiel d'alimentation (V12) et une cathode connectée à ladite première broche (IIC_uC), et/ou
- au moins une première diode (D25) présentant une anode connectée fonctionnellement audit deuxième potentiel d'alimentation (V12) et une cathode connectée à ladite deuxième broche, et au moins une deuxième diode (D18 et/ou D27) présentant une anode connectée à l'anode de ladite première diode (D25) et une cathode connectée à ladite première broche IIC_uC), et/ou
- au moins une première diode (D25) présentant une anode connectée fonctionnellement audit deuxième potentiel d'alimentation (V12) et une cathode connectée à ladite deuxième broche, au moins une deuxième diode (D18) et une troisième diode (D27) connectées ensemble en cascade, une anode de la deuxième diode (D18) étant connectée à l'anode de ladite première diode (D25) et une cathode de la troisième diode (D27) étant connectée à ladite première broche (IIC_uC), et/ou
- au moins une première diode (D25) présentant une anode connectée fonctionnellement audit deuxième potentiel d'alimentation (V12) et une cathode connectée à ladite deuxième broche, et au moins une deuxième diode (D18 ou D27) présentant une anode connectée à l'anode de ladite première diode (D25) et une cathode connectée à ladite première broche (IIC_uC) par l'intermédiaire d'une résistance supplémentaire, et/ou
- au moins une première diode (D25) présentant une anode connectée fonctionnellement audit deuxième potentiel d'alimentation (V12) et une cathode connectée à ladite deuxième broche, et au moins une résistance supplémentaire qui connecte également l'anode de la première diode à ladite première broche (IIC_uC).

4. Dispositif selon la revendication 3, dans lequel ladite première broche (IIC_uC) est maintenue audit potentiel logique haut (V_uC HAUT) au moyen d'un premier diviseur de tension connecté audit deuxième potentiel d'alimentation (V12) et comprenant une résistance de rappel vers le niveau haut égale à la somme d'au moins une deuxième résistance (R19) et d'une troisième résistance (R43) connectée audit premier potentiel de référence (0).

5. Dispositif selon l'une des revendications 2 à 4 comprenant, de plus, une quatrième diode (D26) présentant une cathode connectée à ladite deuxième broche (IIC_Bus) et une anode connectée au dit troisième potentiel de référence (RIF4).

6. Dispositif selon l'une des revendications 3 à 5, dans lequel ledit circuit de commande (P) comporte un deuxième diviseur de tension agencé pour définir un quatrième potentiel d'alimentation (VCC_BAR1) comprenant une résistance de rappel vers le niveau haut (R15) connectée au dit deuxième potentiel d'alimentation (V12), une résistance (R16) connectée audit premier potentiel de référence (0), cette dernière étant en parallèle avec un condensateur de filtrage (C12), ledit quatrième potentiel d'alimentation définissant ledit troisième potentiel de référence (RIF4) à travers une quatrième résistance (R43) en parallèle avec un condensateur de drainage (C14).

7. Dispositif selon l'une quelconque des revendications précédentes, dans lequel :
lesdits premiers moyens de commutation comprennent un transistor (Q25) ;
ledit premier diviseur est agencé pour générer un potentiel logique (V_uC) de 3,3 volts environ, et/ou ledit deuxième diviseur est agencé pour générer ledit quatrième potentiel de référence (VCC_BAR1) égal à 2 volts environ, et/ou
ladite première résistance (R42) présente une valeur de résistance de 2,2 kΩ environ, et/ou
ladite deuxième résistance (R19) présente une valeur de résistance de 22 kΩ environ, et/ou
ledit premier diviseur de tension comporte une résistance (R43) connectée audit premier potentiel de référence (0) avec une valeur de résistance de 10 kΩ environ, et/ou ladite résistance de rappel vers le niveau haut (R15) du deuxième diviseur de tension possède une valeur de résistance de 20 kΩ environ et une résistance connectée audit premier potentiel de référence (0) avec une valeur de résistance de 4 kΩ environ, et/ou
ladite quatrième résistance (R43) présente une valeur de résistance de 10 kΩ environ, et/ou
ledit condensateur de drainage présente une capacité de 100 pF environ.

8. Dispositif selon l'une quelconque des revendications précédentes, dans lequel ladite deuxième broche est maintenue audit deuxième potentiel logique haut (V_Bus Haut) à travers une troisième résistance de rappel vers le niveau haut (R17).

9. Structure de communication de type IIC comportant au moins un bus de type IIC et au moins un dispositif de traitement comportant au moins un port de moyens de communication agencé pour communiquer par l'intermédiaire du bus de type IIC et **caractérisé en ce qu'**il comporte un dispositif d'interfaçage selon l'une quelconque des revendications précédentes.

10. Appareil électroménager comportant un dispositif selon l'une quelconque des revendications 1 à 8 et/ou comportant une structure de communication de type I2C selon la revendication 9.
